(19) Europäisches Patentamt
European Patent Office
Office européen des brevets

(11) EP 2 475 692 B1

(12) **EUROPÄISCHE PATENTSCHRIFT**

(45) Veröffentlichungstag und Bekanntmachung des Hinweises auf die Patenterteilung:
**29.04.2015 Patentblatt 2015/18**

(21) Anmeldenummer: **10771369.5**

(22) Anmeldetag: **07.09.2010**

(51) Int Cl.:
***C08F 12/00*** *(2006.01)* ***C08L 25/00*** *(2006.01)*

(86) Internationale Anmeldenummer:
**PCT/EP2010/063086**

(87) Internationale Veröffentlichungsnummer:
**WO 2011/029810 (17.03.2011 Gazette 2011/11)**

(54) **VERFAHREN ZUR HERSTELLUNG EINER WÄSSRIGEN BINDEMITTELDISPERSION**
METHOD FOR PRODUCING AN AQUEOUS BINDING AGENT DISPERSION
PROCÉDÉ DE PRÉPARATION D'UNE DISPERSION AQUEUSE DE LIANT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.09.2009 EP 09169849**

(43) Veröffentlichungstag der Anmeldung:
**18.07.2012 Patentblatt 2012/29**

(73) Patentinhaber: **BASF SE**
**67056 Ludwigshafen (DE)**

(72) Erfinder:
- **MÜLLER, Kevin**
**64646 Heppenheim (DE)**
- **MICHL, Kathrin**
**67063 Ludwigshafen (DE)**
- **BRAND, Christian**
**67310 Hettenleidelheim (DE)**
- **OLFERMANN, Kai**
**67659 Kaiserslautern (DE)**

(56) Entgegenhaltungen:
**EP-A1- 0 583 086** **JP-A- 59 008 747**
**JP-A- 63 264 958** **US-A- 5 718 728**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Beschreibung

Gegenstand der vorliegenden Erfindung ist ein Verfahren zur Herstellung einer wässrigen Dispersion eines Polymerisats A durch radikalisch initiierte wässrige Emulsionspolymerisation ethylenisch ungesättigter Monomerer in Anwesenheit wenigstens eines Dispergierhilfsmittels und wenigstens eines Radikalinitiators, welches dadurch gekennzeichnet ist, dass zur Polymerisation

| | |
|---|---|
| 0,1 bis 5 Gew.-% | Acrylamid und/oder Methacrylamid (MonomerA1), |
| 0,1 bis 15 Gew.-% | wenigstens einer ethylenisch ungesättigten $C_3$- bis $C_6$-Mono- oder Dicarbonsäure (Monomer A2), |
| 0,1 bis 10 Gew.-% | wenigstens einer ethylenisch ungesättigten Verbindung, welche wenigstens eine Oxiranyl- oder eine Oxetanylgruppe aufweist (Monomer A3), und |
| 70 bis 99,7 Gew.-% | wenigstens einer anderen ethylenisch ungesättigten Verbindung, welche mit den Monomeren A1 bis A3 copolymerisierbar ist (Monomer A4), |

eingesetzt werden, wobei sich die Monomerenmengen A1 bis A4 zu 100 Gew.-% (Gesamtmonomerenmenge) addieren.

Gegenstand der vorliegenden Erfindung sind ferner wässrige Polymerisatdispersionen, welche nach dem erfindungsgemäßen Verfahren erhalten wurden, die Verwendung dieser wässrigen Polymermerisatdispersionen als Bindemittel für körnige und/oder faserförmige Substrate, Verfahren zur Herstellung von Formkörpern unter Verwendung der erfindungsgemäßen wässrigen Polymerisatdispersiondispersion sowie die nach dem erfindungsgemäßen Verfahren zugänglichen Formkörper selbst.

Die Verfestigung von körnigen oder faserförmigen Substraten, insbesondere in flächenförmigen Gebilden, wie beispielsweise Faservliesen, Faserplatten, Spanplatten oder Papieren etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden

Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Desweiteren sind dem Fachmann formaldehydfreie wässrige Bindemittelsysteme auf Basis von Polycarbonsäuren und Polyolen bzw. Polyaminen geläufig (siehe beispielsweise EP-A 445578, EP-A 661305, EP-A 882074, EP-A 882093, EP-A 882094, EP-A 902796, EP-A 1005508, EP-A 1018523, EP-A 1240205, EP-A 1448733, EP-A 1340774 oder EP-A 1457245).

Aufgabe der vorliegenden Erfindung war es, ein formaldehydfreies Bindemittelsystem für körnige und/oder faserförmige Substrate, insbesondere Papiere, zur Verfügung zu stellen, durch welches im Vergleich zu den Bindemitteln des Standes der Technik Substrate mit einem verbesserten Berstdruck resultieren.

Demgemäß wurde die eingangs definierte wässrige Dispersion des Polymerisats A (wässrige Polymerisat A-Dispersion) als Bindemittel gefunden.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New Y-ork (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende erfindungsgemäße Verfahren lediglich durch den Einsatz der spezifischen Monomeren A1 bis A4.

Als Monomere A1 werden Acrylamid und/oder Methacrylamid eingesetzt, wobei Methacrylamid insbesondere bevorzugt ist.

Die Menge der Monomeren A1 im erfindungsgemäßen Verfahren beträgt 0,1 bis 5 Gew.-%, bevorzugt 0,5 bis 3 Gew.-% und insbesondere bevorzugt 0,7 bis 2,5 Gew.-%, jeweils bezogen auf die Gesamtmonomerenmenge.

Als Monomere A2 finden ethylenisch ungesättigte, insbesondere α,β-monoethylenisch ungesättigte $C_3$- bis $C_6$-Mono- oder Dicarbonsäuren Verwendung, wobei α,β-monoethylenisch ungesättigte $C_3$- und $C_4$-Mono- und $C_4$- bis $C_6$-Dicarbonsäuren bevorzugt sind. Als Monomere A2 seien beispielhaft Acrylsäure, Methacrylsäure, Ethylacrylsäure, Allylessigsäure, Crotonsäure, Vinylessigsäure, Maleinsäure, Fumarsäure, Itakonsäure, Methylmaleinsäure, Methylenmalonsäure, Dimethylacrylsäure und/oder 1,2,3,6-Tetrahydrophthalsäure sowie die Ammonium-, Natrium- oder Kaliumsalze der vorgenannten Säuren genannt, wobei Acrylsäure und/oder Methacrylsäure insbesondere bevorzugt sind. Selbstverständlich werden zu den $C_4$- bis $C_6$-Dicarbonsäuren erfindungsgemäß auch die davon abgeleiteten Anhydride, wie beispielsweise Maleinsäureanhydrid und/oder Methylmaleinsäureanhydrid als zugehörig betrachtet.

Die Menge der Monomeren A2 im erfindungsgemäßen Verfahren beträgt 0,1 bis 15 Gew.-%, bevorzugt 0,5 bis 10 Gew.-% und insbesondere bevorzugt 1 bis 7 Gew.-%, jeweils bezogen auf die Gesamtmonomerenmenge.

Als Monomere A3 werden ethylenisch, insbesondere α,β-monoethylenisch ungesättigte Verbindungen eingesetzt, welche wenigstens eine Oxiranyl- oder eine Oxetanylgruppe aufweisen, wobei solche Verbindungen bevorzugt sind, welche eine Oxiranylgruppe aufweisen. Als Monomere A3 mit wenigstens einer Oxiranylgruppe seien beispielhaft Vinyloxiran, Allyloxiran, Glycidylacrylat und/oder Glycidylmethacrylat und als Monomere A3 mit wenigstens einer Oxetanylgruppe Vinyloxetan, Allyloxetan, Acrylsäure-3-methyloxetan-3-ylmethylester und/oder 2-Methacrylsäure-3-methyloxetan-3-ylmethylester genannt. Mit besonderem Vorzug werden Glycidylacrylat und/oder Glycidylmethacrylat eingesetzt, wobei Glycidylmethacrylat besonders bevorzugt ist.

Die Menge der Monomeren A3 im erfindungsgemäßen Verfahren beträgt 0,1 bis 10 Gew.-%, bevorzugt 0,3 bis 7 Gew.-% und insbesondere bevorzugt 0,5 bis 5 Gew.-%, jeweils bezogen auf die Gesamtmonomerenmenge.

Als Monomere A4 kommen prinzipiell alle ethylenisch ungesättigten Verbindungen in Betracht, welche sich von den Monomeren A1 bis A3 unterscheiden, aber in einfacher Weise mit diesen radikalisch copolymerisierbar sind, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, - decyl- und -2-ethylhexylester, Fumar- und Maleinsäuredimethylester oder -di-n-butylester, Nitrile α,β-monoethylenisch ungesättigter Carbonsäuren, wie Acrylnitril, Methacryl-

nitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A4, einen Anteil von ≥ 80 Gew.-%, bevorzugt ≥ 85 Gew.-% und insbesondere bevorzugt ≥ 90 Gew.-% auf sich vereinen oder sogar die Gesamtmenge der Monomeren A4 bilden. In aller Regel weisen diese Monomeren in Wasser bei Normalbedingungen [20 °C, 1 atm (absolut)] lediglich eine mäßige bis geringe Löslichkeit auf.

Monomere A4, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Ureido- oder N-heterocyclische Gruppe und/oder deren am Stickstoff protonierten oder alkylierten Ammoniumderivate enthalten. Beispielhaft genannt seien Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall werden die vorgenannten wasserlöslichen Monomeren A4 lediglich als modifizierende Monomere in Mengen von ≤ 10 Gew.-%, bevorzugt ≤ 5 Gew.-% und insbesondere bevorzugt ≤ 3 Gew.-%, jeweils bezogen auf die Gesamtmenge an Monomeren A4, verwendet. Insbesondere bevorzugt werden jedoch keinerlei derartigen wasserlöslichen Monomeren A4 bei Herstellung des Polymerisats A eingesetzt.

Monomere A4, die üblicherweise die innere Festigkeit der Verfilmungen einer Polymermatrix erhöhen, weisen normalerweise wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Häufig werden die vorgenannten vernetzenden Monomeren A4 in Mengen von ≤ 10 Gew.-%, bevorzugt jedoch in Mengen von ≤ 3 Gew.-%, jeweils bezogen auf die Gesamtmenge an Monomeren A4, verwendet. Insbesondere bevorzugt werden jedoch keinerlei derartigen vernetzenden Monomeren A4 eingesetzt.

Vorteilhaft werden zur Herstellung des Polymerisats A als Monomere A4 solche Monomeren oder Monomerenmischungen eingesetzt, welche zu

- 50 bis 100 Gew.-% Ester der Acryl- und/oder Methacrylsäure mit 1 bis 12 Kohlenstoffatomen aufweisenden Alkanolen, oder
- 50 bis 100 Gew.-% Styrol und/oder Butadien, oder
- 50 bis 100 Gew.-% Vinylchlorid und/oder Vinylidenchlorid, oder
- 50 bis 100 Gew.-% Vinylacetat und/oder Vinylpropionat

enthalten.

Als Monomere A4 bevorzugt sind Styrol, n-Butylacrylat, Methylmethacrylat, tert.-Butylacrylat, Methylacrylat, Ethylacrylat, Ethylmethacrylat, 2-Propylheptylacrylat und/oder 2-Ethylhexylacrylat.

Mit großem Vorteil werden im erfindungsgemäßen Verfahren Methacrylamid als Monomer A1, Acrylsäure und/oder Methacrylsäure als Monomer A2, Glycidylacrylat und/oder Glycidylmethacrylat als Monomer A3 und Styrol, n-Butylacrylat, Methylmethacrylat und/oder 2-Ethylhexylacrylat als Monomer A4 eingesetzt.

Vorteilhaft werden im erfindungsgemäßen Verfahren

| | |
|---|---|
| 0,5 bis 3 Gew.-% | wenigstens eines Monomeren A1 |
| 0,5 bis 10 Gew.-% | wenigstens eines Monomeren A2 und |
| 0,3 bis 7 Gew.-% | wenigstens eines Monomeren A3 und |
| 80 bis 98,7 Gew.-% | wenigstens eines Monomeren A4 |

und insbesondere vorteilhaft

| | |
|---|---|
| 0,7 bis 2,5 Gew.-% | wenigstens eines Monomeren A1 |
| 1 bis 7 Gew.-% | wenigstens eines Monomeren A2 und |
| 0,5 bis 5 Gew.-% | wenigstens eines Monomeren A3 und |
| 85,5 bis 97,8 Gew.-% | wenigstens eines Monomeren A4 |

eingesetzt.

Erfindungsgemäß kann die Gesamtmenge der Monomeren A1 bis A4 im wässrigen Reaktionsmedium vor Initiierung der Polymerisationsreaktion vorgelegt werden. Es ist aber auch möglich, gegebenenfalls lediglich eine Teilmenge der Monomeren A1 bis A4 im wässrigen Reaktionsmedium vor Initiierung der Polymerisationsreaktion vorzulegen und dann nach Initiierung der Polymerisation unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Dabei kann die Dosierung der Monomeren A1 bis A4 als separate Einzelströme, als inhomogene oder homogene (Teil)gemische oder als Monomerenemulsion erfolgen. Mit Vorteil werden die Monomeren A1 bis A4 in Form eines Monomerengemisches, insbesondere in Form einer wässrigen Monomerenemulsion dosiert.

Erfindungsgemäß werden im Rahmen des vorliegenden Verfahrens Dispergierhilfsmittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergierhilfsmittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

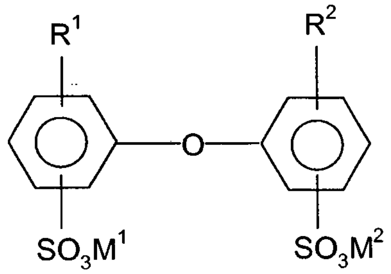

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,1 und $\leq$ 3 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft $\geq$ 0,1 und $\leq$ 10 Gew.-% und häufig $\geq$ 0,2 und $\leq$ 7 Gew.-%, jeweils bezogen die Gesamtmonomeren.

Bevorzugt werden jedoch anionische und/oder nichtionische Emulgatoren und insbesondere bevorzugt anionische Emulgatoren als Dispergierhilfsmittel eingesetzt.

Erfindungsgemäß kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der erfindungsgemäßen radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, - Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten. Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von gasförmigen Monomeren A oder Monomeren A mit einem niedrigen Siedepunkt wird im erfindungsgemäßen Verfahren vorzugsweise unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm bzw. im Überdruck bis zu 20 bar unter Sauerstoffausschluss, insbesondere unter Inertgasatmosphäre, wie beispielsweise unter Stickstoff oder Argon durchgeführt.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole,

wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A1 bis A4 während der Polymerisation zugeführt werden.

Die nach dem erfindungsgemäßen Verfahren zugänglichen Polymerisate A können prinzipiell Glasübergangstemperaturen Tg im Bereich von ≥ -70 und ≤ 150 °C aufweisen. Mit Vorteil werden die Monomeren A1 bis A4 so gewählt, dass die erhaltenen Polymerisate A eine Glasübergangstemperatur Tg im Bereich von ≥ -10 und ≤ 130 °C und insbesondere vorteilhaft im Bereich ≥ 10 und ≤ 100 °C aufweisen. Unter Glasübergangstemperatur Tg wird im Rahmen dieser Schrift die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Vorteilhaft kann die erfindungsgemäße radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Gesamtmonomerenmenge, erfolgen.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß

hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A1 bis A4 zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die erfindungsgemäß zugänglichen wässrigen Polymerisat A-Dispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 100 und 700 nm bzw. 100 bis 400 nm.

Häufig werden bei den erhaltenen wässrigen Polymerisat A-Dispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt.

Die nach dem erfindungsgemäßen Verfahren zugänglichen wässrigen Polymerisat A-Dispersionen können prinzipiell zur Herstellung von Klebstoffen, Dichtmassen, Kunststoffputzen, Papierstreichmassen, Faservliesen, Anstrichmitteln und Beschichtungsmitteln für organische Substrate, wie beispielsweise Leder oder textile Stoffe, sowie zur Modifizierung von mineralischen Bindemitteln eingesetzt werden.

Die nach dem erfindungsgemäßen Verfahren zugänglichen wässrigen Polymerisat A-Dispersionen eignen sich jedoch insbesondere vorteilhaft zur Verwendung als Bindemittel für körnige und/oder faserförmige Substrate. Mit Vorteil lassen sich die genannten wässrigen Polymerisat A-Dispersionen daher zur Herstellung von Formkörpern aus körnigen und/oder faserförmigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat erfindungsgemäß auch die aus Fasern erhältlichen Faservliese, wie beispielsweise so genannte mechanisch verfestigte oder chemisch vorgebundene Faservliese sowie mechanisch verfestigte oder chemisch vorgebundene Papiere (insbesondere Rohpapiere und geleimte Papiere) sowie insbesondere auch poröse Filterpapiere mit umfassen.

Als Rohpapier soll im Rahmen dieser Schrift ein nach DIN 6730 (August 1985) flächiger, im wesentlichen aus Fasern vorwiegend pflanzlicher Herkunft bestehender Werkstoff verstanden werden, der durch Entwässerung einer verschiedene Hilfsstoffe enthaltenden Faserstoffaufschwemmung auf einem Sieb gebildet wird, wobei der so erhaltene Faserfilz anschließend verdichtet und getrocknet wird. Als Hilfsstoffe finden beispielsweise dem Fachmann bekannte Füllstoffe, Farbstoffe, Pigmente, Bindemittel, optische Aufheller, Retentionsmittel, Netzmittel, Entschäumer, Konservierungsmittel, Schleimbekämpfungsmittel, Weichmacher, Antiblockmittel, Antistatika, Hydrophobierungsmittel usw. Verwendung. Abhängig vom erzielten Flächengewicht des erhaltenen flächigen Werkstoffs spricht man auch von Rohpapier (Flächengewicht ≤ 225 $g/m^2$) oder von Rohpappe (Flächengewicht > 225 $g/m^2$). Daneben ist auch noch der Begriff "Karton" gebräuchlich, welcher mit einem Flächengewicht von ca. 150 bis 600 $g/m^2$ sowohl Rohpapiersorten als auch Rohpappensorten umfasst. Aus Gründen der Einfachheit soll im folgenden der Begriff "Rohpapier" sowohl Rohpapier, Rohpappe und Karton umfassen.

Häufig werden Rohpapieroberflächen mit Leimungsmitteln behandelt, welche im wesentlichen die Saugfähigkeit und damit die Beschreib- bzw. Bedruckbarkeit des Rohpapiers beeinflussen. Die so behandelten Papiere werden als "geleimte Papiere" bezeichnet. Entsprechende Verfahren sowie Art und Mengen der entsprechenden Leimungsmittel

sind dem Fachmann geläufig.

Häufig wird das Rohpapier oder das geleimte Papier noch durch das sogenannte Streichen veredelt, bzw. in die fertige Gebrauchsform überführt. Dabei versteht man unter Streichen von Papier die ein- oder beidseitige Beschichtung des Papiers mit einer im wesentlichen aus Pigmenten und Bindemitteln bestehenden wässrigen Streichmasse. Abhängig von der Art der Streichfarbe, der zu erzielenden Schichtdicke bzw. der herzustellenden Papiersorte, werden hierfür unterschiedliche Streichverfahren, beispielsweise die dem Fachmann bekannten Walzen-, Rakel-, Luftbürsten- oder Gussstreichverfahren verwendet, welchen sich jeweils ein Trockenschritt anschließt. Die so behandelten Papiere werden als "gestrichene Papiere" bezeichnet.

Insbesondere vorteilhaft ist die erfindungsgemäße wässrige Polymerisat A-Dispersion als formaldehydfreies Bindemittelsystem für die vorgenannten Fasern bzw. daraus gebildete Faservliese oder Papiere geeignet. Mit besonderem Vorteil werden die erfindungsgemäßen wässrigen Polymerisat A-Dispersionen als alleinige oder als zusätzliche Bindemittel oder Bindemittelkomponente für die Verstärkung von Rohpapier und für geleimtes Papier, insbesondere jedoch für Filterpapier eingesetzt.

Das Verfahren zur Herstellung eines Formkörpers aus einem körnigen und/oder faserförmigen Substrat und der vorgenannten wässrigen Polymerisat A-Dispersion oder einer diese enthaltenden Bindemittelformulierung erfolgt vorteilhaft dergestalt, dass die erfindungsgemäße wässrige Polymerisat A-Dispersion oder eine diese enthaltende Bindemittelformulierung auf das körnige und/oder faserförmige Substrat aufgebracht wird bzw. das körnige und/oder faserförmige Substrat mit der erfindungsgemäßen wässrigen Polymerisat A-Dispersion oder einer diese enthaltende Bindemittelformulierung getränkt wird, gegebenenfalls das mit der wässrigen Polymerisat A-Dispersion oder einer diese enthaltenden Bindemittelformulierung behandelte körnige und/oder faserförmige Substrat in Form gebracht wird und das so behandelte körnige und/oder faserförmige Substrat anschließend einem thermischen Behandlungsschritt bei einer Temperatur ≥ 50 °C unterzogen werden.

Wässrige Bindemittelformulierungen, welche eine erfindungsgemäße wässrige Polymerisat A-Dispersion enthalten, können weitere, dem Fachmann in Art und Menge geläufige übliche Hilfsstoffe enthalten, wie beispielsweise Füllstoffe, Farbstoffe, Pigmente, optische Aufheller, Retentionsmittel, Netzmittel, Entschäumer, Konservierungsmittel, Schleimbekämpfungsmittel, Weichmacher, Antiblockmittel, Antistatika, Hydrophobierungsmittel etc.

Das Aufbringen (Imprägnieren) der erfindungsgemäßen wässrigen Polymerisat A-Dispersion oder einer diese enthaltenden Bindemittelformulierung auf das körnige und/oder faserförmige Substrat erfolgt in der Regel dergestalt, dass die erfindungsgemäße wässrige Polymerisat A-Dispersion oder eine diese enthaltende Bindemittelformulierung gleichmäßig auf die Oberfläche des körnigen und/oder faserförmigen Substrats aufgebracht wird. Dabei wird die Menge an wässriger Polymerisat A-Dispersion oder an wässriger Bindemittelformulierung so gewählt, dass pro 100 g körnigem und/oder faserförmigem Substrat ≥ 1 g und ≤ 100 g, bevorzugt ≥ 1 g und ≤ 50 g und insbesondere bevorzugt ≥ 5 g und ≤ 30 g Polymerisat A (als Feststoff gerechnet) eingesetzt werden. Die Technik der Imprägnierung der körnigen und/oder faserförmigen Substrate ist dem Fachmann geläufig und erfolgt beispielsweise durch Tränkung oder durch Besprühen der körnigen und/oder faserförmigen Substrate.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung und Aushärtung des gegebenenfalls in Form gebrachten imprägnierten körnigen und/oder faserförmigen Substrats bei einer Temperatur ≥ 50 °C und ≤ 250 °C, bevorzugt ≥ 100 °C und ≤ 220 °C und insbesondere bevorzugt ≥ 150 und ≤ 200 °C.

Die nach dem erfindungsgemäßen Verfahren zugänglichen Formkörper, insbesondere Faservliese oder Papiere weisen vorteilhafte Eigenschaften, insbesondere eine verbesserte Reißfestigkeit bzw. einen erhöhten Berstdruck im Vergleich zu den Formkörpern des Standes der Technik auf.

Die Erfindung soll anhand nachfolgender nicht einschränkender Beispiele erläutert werden.

Beispiele

a) wässrige Polymerisat A-Dispersionen

Beispiel 1

In einem mit Rührer, Thermometer, Rückflusskühler und Dosierleitungen ausgestatteten 5 l-Polymerisationsgefäß wurde bei 20 bis 25 °C (Raumtemperatur) und unter Stickstoffatmosphäre ein Gemisch bestehend aus 560 g entionisiertem Wasser und 26,3 g einer wässrigen Polystyrolsaatlatex (Feststoffgehalt 33 Gew.-%; gewichtsmittlerer Teilchendurchmesser 30 nm) vorgelegt.

Zulauf 1 bestand aus einer homogenen Emulsion, hergestellt aus 396 g entionisiertem Wasser, 46,7 g einer

3 gew.-%igen wässrigen Natriumpyrophosphatlösung, 6,2 g einer 45 gew.-%igen wässrigen Lösung eines $C_{12}C_{14}$-Alkyldiphenylether-disulfonsäure-Natriumsalzes (Dowfax® 2A1), 50,0 g einer 28 gew.-%igen wässrigen Lösung von Natriumlaurylethersulfat (Texapon® NSO der Firma Cognis), 68,6 g Acrylsäure, 46,7 g einer 15 gew.-%igen wässrigen Lösung von Methacrylamid, 23,5 g Glycidylmethacrylat, 734 g Styrol und 567 g n-Butylacrylat.

Zulauf 2 bestand aus 110 g einer 7 gew.-%igen wässrigen Lösung von Natriumperoxidisulfat.

Die Vorlage wurde unter Rühren und Stickstoffatmosphäre auf 95 °C aufgeheizt. Anschließend wurden unter Aufrechterhaltung dieser Temperatur 33,0 g von Zulauf 2 zugegeben und die Vorlage 5 Minuten gerührt. Daran anschließend wurden gleichzeitig beginnend Zulauf 1 innerhalb von 135 Minuten und die Restmenge von Zulauf 2 innerhalb von 140 Minuten mit gleichbleibenden Mengenstömen zudosiert.

Nach Beendigung der Zuläufe wurde noch 15 Minuten bei 95 °C nachpolymerisiert und danach die erhaltene wässrige Polymerisatdispersion auf 75 °C abgekühlt. Bei dieser Temperatur wurden gleichzeitig beginnend 35,0 g einer 10 gew.-%igen wässrigen tert.-Butylhydroperoxid-Lösung und 42,1 g einer 13,3 gew.-%igen wässrigen Lösung von Acetonbisulfit (molares 1:1-Additionsprodukt aus Aceton und Natriumhydrogensulfit) innerhalb von 60 Minuten mit gleichbleibenden Mengenströmen zudosiert. Nach Beendigung der Dosierungen wurde die wässrige Polymerisatdispersion auf Raumtemperatur abgekühlt. Der erhaltenen wässrigen Polymerisatdispersion wurden bei Raumtemperatur noch 84,0 g entionisiertes Wasser sowie als Biozide 84,0 g Acticid® MV (1,5 gew.-%ige wässrige Biozidlösung der Firma Thor GmbH) und 11,2 g Acticid® MBS (5 gew.-%ige wässrige Biozidlösung der Firma Thor GmbH) zugegeben und danach die wässrige Polymerisatdispersion über 120 µm-Filter filtriert. Die erhaltene wässrige Polymerisatdispersion wies einen Feststoffgehalt von 49,8 Gew.-% auf. Die zahlenmittlere Teilchengröße wurde zu 172 nm und der Tg-Wert zu 40 °C bestimmt.

Die Feststoffgehalte wurden generell bestimmt, indem eine definierte Menge der wässrigen Polymerisatdispersion (ca. 0,8 g) mit Hilfe Feuchtebestimmer HR73 der Firma Mettler Toledo bei einer Temperatur von 130 °C bis zur Gewichtskonstanz getrocknet wurde.

Der zahlenmittlere Teilchendurchmesser der Latexteilchen wurde durch dynamische Lichtstreuung (DLS) an einer 0,005 bis 0,01 gewichtsprozentigen wässrigen Dispersion bei 23 °C mittels Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Glasübergangstemperatur wurde mit Hilfe eines Differentialkalorimeters der Firma Mettler Toledo bestimmt. Die Heizrate betrug 10K/min. Die Auswertung erfolgte mittels der Software Star Version 9.01.

Beispiel 2

Die Herstellung von Beispiel 2 erfolgte völlig analog Beispiel 1, jedoch mit dem Unterschied, dass in Zulauf 1 393 g anstelle von 396 g entionisiertem Wasser, 26,3 g einer 50 gew.-%igen wässrigen Lösung von Acrylamid anstelle von 46,7 g einer 15 gew.-%igen wässrigen Lösung von Methacrylamid und 728 g anstelle von 734 g Styrol eingesetzt wurden.

Die erhaltene wässrige Polymerisatdispersion wies einen Feststoffgehalt von 50,2 Gew.-% auf. Die zahlenmittlere Teilchengröße wurde zu 172 nm und der Tg-Wert zu 39 °C bestimmt.

Beispiel 3

Die Herstellung von Beispiel 3 erfolgte völlig analog Beispiel 1, jedoch mit dem Unterschied, dass in Zulauf 1 266 g anstelle von 396 g entionisiertem Wasser, 175 g anstelle von 46,7 g einer 15 gew.-%igen wässrigen Lösung von Methacrylamid und 715 g anstelle von 734 g Styrol eingesetzt wurden.

Die erhaltene wässrige Polymerisatdispersion wies einen Feststoffgehalt von 50,5 Gew.-% auf. Die zahlenmittlere Teilchengröße wurde zu 179 nm und der Tg-Wert zu 39 °C bestimmt.

Beispiel 4

Die Herstellung von Beispiel 4 erfolgte völlig analog Beispiel 1, jedoch mit dem Unterschied, dass in Zulauf 1 158 g anstelle von 396 g entionisiertem Wasser, 327 g anstelle von 46,7 g einer 15 gew.-%igen wässrigen Lösung von Methacrylamid und 692 g anstelle von 734 g Styrol eingesetzt wurden.

Die erhaltene wässrige Polymerisatdispersion wies einen Feststoffgehalt von 49,1 Gew.-% auf. Die zahlenmittlere Teilchengröße wurde zu 178 nm und der Tg-Wert zu 39 °C bestimmt.

Vergleichsbeispiel V1

Die Herstellung des Vergleichsbeispiels V1 erfolgte völlig analog Beispiel 1, jedoch mit dem Unterschied, dass

in Zulauf 1 436 g anstelle von 396 g entionisiertem Wasser, 741 g anstelle von 734 g Styrol und kein Methacrylamid eingesetzt wurden.

Die erhaltene wässrige Polymerisatdispersion wies einen Feststoffgehalt von 49,6 Gew.-% auf. Die zahlenmittlere Teilchengröße wurde zu 175 nm und der Tg-Wert zu 40 °C bestimmt.

Vergleichsbeispiel V2

Die Herstellung des Vergleichsbeispiels V2 erfolgte völlig analog Beispiel 1, jedoch mit dem Unterschied, dass in Zulauf 1 757 g anstelle von 734 g Styrol und kein Glycidylmethacrylat eingesetzt wurden.

Die erhaltene wässrige Polymerisatdispersion wies einen Feststoffgehalt von 50,2 Gew.-% auf. Die zahlenmittlere Teilchengröße wurde zu 184 nm und der Tg-Wert zu 41 °C bestimmt.

Vergleichsbeispiel V3

Die Herstellung des Vergleichsbeispiels V3 erfolgte völlig analog Beispiel 1, jedoch mit dem Unterschied, dass in Zulauf 1 802 g anstelle von 734 g Styrol und keine Acrylsäure eingesetzt wurden.

Die erhaltene wässrige Polymerisatdispersion wies einen Feststoffgehalt von 49,8 Gew.-% auf. Die zahlenmittlere Teilchengröße wurde zu 168 nm und der Tg-Wert zu 42 °C bestimmt.

b) anwendungstechnische Prüfungen

Für die anwendungstechnische Prüfung wurde ein marktübliches Rohpapier zur Herstellung von Automobilluftfiltern mit einem Flächengewicht von 107 g/m$^2$ eingesetzt. Die Papierblätter hatten eine Größe von 21,0 x 29,7 cm [DIN A4], wobei die Längsrichtung der Maschinenlaufrichtung entsprach.

Die gemäß den Beispielen 1 bis 4 und der Vergleichsbeispiele V1 bis V3 erhaltenen wässrigen Polymerisatdispersionen wurden mit entionisiertem Wasser auf einen Feststoffgehalt von 10 Gew.-% verdünnt. Danach wurden die vorgenannten Papierblätter in Längsrichtung über ein Endlos-Siebband mit einer Bandlaufgeschwindigkeit von 80 cm pro Minute durch die so erhaltenen Bindemittelflotten 1 bis 4 sowie V1 bis V3 geleitet. Durch anschließende Absaugung der Bindemittelflotten wurde ein Nassauftrag von 210 g/m$^2$ (entsprechend 21 g Polymerisat pro m$^2$) eingestellt. Daran anschließend wurden die feuchten Papierblätter für 3 Minuten bei 180 °C in einem Mathisofen bei maximalem Heißluftstrom getrocknet. Danach wurden die so erhaltenen imprägnierten Papiere für 24 Stunden bei 23 °C und 50 % relativer Luftfeuchtigkeit in einem Klimaraum gelagert.

Daran anschließend wurden aus den imprägnierten Papieren 20 x 15 cm Prüfstreifen ausgeschnitten. Entsprechend den zur Imprägnierung verwendeten wässrigen Polymerisatdispersionen 1 bis 4 sowie V1 bis V3, werden diese als Prüfstreifen 1 bis 4 bzw. Prüfstreifen V1 bis V3 bezeichnet. Die Prüfstreifen wurden für 2 Minuten in einer 2 gew.-%igen wässrigen Lösung von Emulgator® K30 (Natriumalkansulfonat mit einer mittleren Kettenlänge von 15 C; Firma Bayer AG) gelagert, überschüssige Emulgatorlösung mit einem Baumwollgewebe abgetupft und unmittelbar danach der Berstdruck (nass) mit einer Festigkeitsprüfmaschine der Fa. Zwick mit dem Prüfmodul Berstdruck gemäß ISO 2758 ermittelt. Dazu wurden die jeweiligen Prüfstreifen über einer kreisförmigen elastischen Membran eingespannt und danach die Membran gemeinsam mit dem jeweiligen Prüfstreifen mittels einer hydraulischen Flüssigkeit solange aufgewölbt bis der jeweilige Prüfstreifen barst. Der Druck beim Bersten der Prüfstreifen wird Berstdruck genannt. Der Berstdruck wird umso besser beurteilt, je höher er ist. Es wurden jeweils 5 separate Messungen durchgeführt. Die in nachfolgender Tabelle 1 angegebenen Berstdruckwerte stellen die Mittelwerte dieser einzelnen Messungen dar.

Tabelle 1: Berstdruckwerte der unter Verwendung der erfindungsgemäßen Polymerisatdispersionen 1 bis 4 sowie der Vergleichsdispersionen V1 bis V3 erhaltenen Prüfstreifen

| Prüfstreifen | Berstdruck (nass) [kPa] |
|---|---|
| V1 | 160 |
| V2 | 158 |
| V3 | 152 |
| 1 | 189 |
| 2 | 197 |
| 3 | 203 |
| 4 | 179 |

**Patentansprüche**

1. Verfahren zur Herstellung einer wässrigen Dispersion eines Polymerisats A durch radikalisch initiierte wässrige Emulsionspolymerisation ethylenisch ungesättigter Monomerer in Anwesenheit wenigstens eines Dispergierhilfsmittels und wenigstens eines Radikalinitiators, **dadurch gekennzeichnet, dass** zur Polymerisation

| | |
|---|---|
| 0,1 bis 5 Gew.-% | Acrylamid und/oder Methacrylamid (Monomer A1), |
| 0,1 bis 15 Gew.-% | wenigstens einer ethylenisch ungesättigten $C_3$-bis $C_6$-Mono- oder Dicarbonsäure (Monomer A2), |
| 0,1 bis 10 Gew.-% | wenigstens einer ethylenisch ungesättigten Verbindung, welche wenigstens eine Oxiranyl- oder eine Oxetanylgruppe aufweist (Monomer A3), und |
| 70 bis 99,7 Gew.-% | wenigstens einer anderen ethylenisch ungesättigten Verbindung, welche mit den Monomeren A1 bis A3 copolymerisierbar ist (Monomer A4), |

eingesetzt werden, wobei sich die Monomerenmengen A1 bis A4 zu 100 Gew.-% addieren.

2. Verfahren nach Anspruch 1, **dadurch gekennzeichnet, dass** zur Polymerisation

| | |
|---|---|
| 0,7 bis 2,5 Gew.-% | wenigstens eines Monomeren A1 |
| 1 bis 7 Gew.-% | wenigstens eines Monomeren A2 und |
| 0,5 bis 5 Gew.-% | wenigstens eines Monomeren A3 und |
| 85,5 bis 97,8 Gew.-% | wenigstens eines Monomeren A4 |

eingesetzt werden.

3. Verfahren nach einem der Ansprüche 1 oder 2, **dadurch gekennzeichnet, dass** Methacrylamid als Monomer A1, Acrylsäure und/oder Methacrylsäure als Monomer A2, Glycidylacrylat und/oder Glycidylmethacrylat als Monomer A3 und Styrol, n-Butylacrylat, Methylmethacrylat und/oder 2-Ethylhexylacrylat als Monomer A4 eingesetzt werden.

4. Verfahren nach einem der Ansprüche 1 bis 3, **dadurch gekennzeichnet, dass** die Monomeren A1 bis A4 und deren Mengen so gewählt werden, dass das erhaltene Polymerisat A eine Glasübergangstemperatur Tg $\geq$ 10 und $\leq$ 100 °C aufweist (gemäß ASTM D 3418-82, ermittelt durch DSC).

5. Verfahren nach einem der Ansprüche 1 bis 4, **dadurch gekennzeichnet, dass** als wenigstens ein Dispergierhilfsmittel ein anionischer Emulgator eingesetzt wird.

6. Wässrige Polymerisatdispersion, erhältlich nach einem Verfahren gemäß einem der Ansprüche 1 bis 5.

7. Verwendung einer wässrigen Polymerisatdispersion gemäß Anspruch 6 als Bindemittel für körnige und/oder faserförmige Substrate.

8. Verwendung nach Anspruch 7, wobei als faserförmiges Substrat ein mechanisch verfestigtes oder chemisch vorgebundenes Papier eingesetzt wird.

9. Verfahren zur Herstellung eines Formkörpers aus körnigen und/oder faserförmigen Substraten, **dadurch gekennzeichnet, dass** eine wässrige Polymerisatdispersion gemäß Anspruch 6 oder eine diese enthaltende Bindemittelformulierung auf das körnige und/oder faserförmige Substrat aufgebracht wird, gegebenenfalls das mit der wässrigen Polymerisatdispersion oder einer diese enthaltende Bindemittelformulierung behandelten körnige und/oder faserförmige Substrat in Form gebracht wird und anschließend das behandelte körnige und/oder faserförmige Substrat einem thermischen Behandlungsschritt bei einer Temperatur $\geq$ 50 °C unterzogen wird.

10. Verfahren nach Anspruch 9, **dadurch gekennzeichnet, dass** die Menge der wässrigen Polymerisatdispersion so gewählt wird, dass pro 100 g körniges und/oder faserförmiges Substrat $\geq$ 1 g und $\leq$ 100 g Polymerisat A aufgebracht werden.

11. Verfahren nach Anspruch 9 oder 10, **dadurch gekennzeichnet, dass** das körnige und/oder faserförmige Substrat

ein chemisch oder physikalisch vorgebundenes Papier ist.

12. Formkörper erhältlich nach einem Verfahren gemäß einem der Ansprüche 9 bis 11.

**Claims**

1. A process for the preparation of an aqueous dispersion of a polymer A by free radical aqueous emulsion polymerization of ethylenically unsaturated monomers in the presence of at least one dispersant and at least one free radical initiator, wherein

| | |
|---|---|
| from 0.1 to 5% | by weight of acrylamide and/or methacrylamide (monomer A1), |
| from 0.1 to 15% | by weight of at least one ethylenically unsaturated $C_3$-to $C_6$-mono- or dicarboxylic acid (monomer A2), |
| from 0.1 to 10% | by weight of at least one ethylenically unsaturated compound which has at least one oxiranyl or one oxetanyl group (monomer A3), and |
| from 70 to 99.7% | by weight of at least one other ethylenically unsaturated compound which is copolymerizable with the monomers A1 to A3 (monomer A4), |

are used for the polymerization, the amounts of monomers A1 to A4 summing to 100% by weight.

2. The process according to claim 1, wherein

| | |
|---|---|
| from 0.7 to 2.5% | by weight of at least one monomer A1 |
| from 1 to 7% | by weight of at least one monomer A2 and |
| from 0.5 to 5% | by weight of at least one monomer A3 and |
| from 85.5 to 97.8% | by weight of at least one monomer A4 |

are used for the polymerization.

3. The process according to either of claims 1 and 2, wherein methacrylamide is used as monomer A1, acrylic acid and/or methacrylic acid is used as monomer A2, glycidyl acrylate and/or glycidyl methacrylate is used as monomer A3 and styrene, n-butyl acrylate, methyl methacrylate and/or 2-ethylhexyl acrylate is used as monomer A4.

4. The process according to any of claims 1 to 3, wherein the monomers A1 to A4 and the amounts thereof are chosen so that the polymer A obtained has a glass transition temperature Tg of ≥ 10 and ≤ 100°C (according to ASTM D 3418-82, determined by DSC).

5. The process according to any of claims 1 to 4, wherein an anionic emulsifier is used as at least one dispersant.

6. An aqueous polymer dispersion obtainable by a process according to claims 1 to 5.

7. The use of an aqueous polymer dispersion according to claim 6 as a binder for particulate and/or fibrous substrates.

8. The use according to claim 7, mechanically compacted or chemically bonded paper being used as the fibrous substrate.

9. A process for the production of a molding from particulate and/or fibrous substrates, wherein an aqueous polymer dispersion according to claim 6 or a binder formulation comprising said dispersion is applied to the particulate and/or fibrous substrate, the particulate and/or fibrous substrate treated with the aqueous polymer dispersion or with a binder formulation comprising said dispersion is optionally shaped and the treated particulate and/or fibrous substrate is then subjected to a thermal treatment step at a temperature of ≥ 50°C.

10. The process according to claim 9, wherein the amount of the aqueous polymer dispersion is chosen so that ≥ 1 g and ≤ 100 g of polymer A are applied per 100 g of particulate and/or fibrous substrate.

**11.** The process according to claim 9 or 10, wherein the particulate and/or fibrous substrate is a chemically or physically prebound paper.

**12.** A molding obtainable by a process according to any of claims 9 to 11.

**Revendications**

**1.** Procédé pour la préparation d'une dispersion aqueuse d'un polymérisat A par polymérisation en émulsion aqueuse à amorçage radicalaire de monomères à insaturation éthylénique en présence d'au moins un adjuvant de dispersion et d'au moins un amorceur de radicaux, **caractérisé en ce que** dans la polymérisation on utilise

| | |
|---|---|
| 0,1 à 5 % en poids | d'acrylamide et/ou de méthacrylamide (monomère A1), |
| 0,1 à 15 % en poids | d'au moins un acide mono- ou dicarboxylique en $C_3$-$C_6$ à insaturation éthylénique (monomère A2), |
| 0,1 à 10 % en poids | d'au moins un composé à insaturation éthylénique, qui comporte au moins un groupe oxiranyle ou un groupe oxétanyle (monomère A3), et |
| 70 à 99,7 % en poids | d'au moins un autre composé à insaturation éthylénique, qui est copolymérisable avec les monomères A1 à A3 (monomère |

la somme des quantités des monomères A1 à A4 étant égale à 100 % en poids.

**2.** Procédé selon la revendication 1, **caractérisé en ce que** dans la polymérisation on utilise

| | |
|---|---|
| 0,7 à 2,5 % en poids | d'au moins un monomère A1, |
| 1 à 7 % en poids | d'au moins un monomère A2 et |
| 0,5 à 5 % en poids | d'au moins un monomère A3 et |
| 85,5 à 97,8 % en poids | d'au moins un monomère A4. |

**3.** Procédé selon l'une quelconque des revendications 1 et 2, **caractérisé en ce qu'**on utilise du méthacrylamide en tant que monomère A1, de l'acide acrylique et/ou de l'acide méthacrylique en tant que monomère A2, de l'acrylate de glycidyle et/ou du méthacrylate de glycidyle en tant que monomère A3 et du styrène, de l'acrylate de n-butyle, du méthacrylate de méthyle et/ou de l'acrylate de 2-éthylhexyle en tant que monomère A4.

**4.** Procédé selon l'une quelconque des revendications 1 à 3, **caractérisé en ce qu'**on choisit les monomères A1 à A4 et leurs quantités de manière que le polymérisat A obtenu présente une température de transition vitreuse Tg $\geq$ 10 et $\leq$ 100 °C, selon ASTM D 3418-82, déterminée par DSC).

**5.** Procédé selon l'une quelconque des revendications 1 à 4, **caractérisé en ce qu'**en tant qu'au moins un adjuvant de dispersion on utilise un émulsifiant anionique.

**6.** Dispersion aqueuse de polymérisat, pouvant être obtenue conformément à un procédé selon l'une quelconque des revendications 1 à 5.

**7.** Utilisation d'une dispersion aqueuse de polymérisat selon la revendication 6, en tant que liant pour substrats granulaires et/ou fibreux.

**8.** Utilisation selon la revendication 7, dans laquelle on utilise comme substrat fibreux un papier consolidé mécaniquement ou pré-lié chimiquement.

**9.** Procédé pour la production d'un corps moulé à base de substrats granulaires et/ou fibreux, **caractérisé en ce qu'**on applique sur le substrat granulaire et/ou fibreux une dispersion aqueuse de polymérisat selon la revendication 6 ou une composition de liant la contenant, éventuellement on met en forme le substrat granulaire et/ou fibreux traité par la dispersion aqueuse de polymérisat ou une composition de liant la contenant et ensuite on soumet le substrat granulaire et/ou fibreux traité à une étape de traitement thermique à une température $\geq$ 50 °C.

**10.** Procédé selon la revendication 9, **caractérisé en ce qu'**on choisit la quantité de la dispersion aqueuse de polymérisat de manière que ≥ 1 g et ≤ 100 g de polymérisat A soient appliqués pour 100 g de substrat granulaire et/ou fibreux.

**11.** Procédé selon la revendication 9 ou 10, **caractérisé en ce que** le substrat granulaire et/ou fibreux est un papier consolidé mécaniquement ou prélié chimiquement.

**12.** Corps moulé pouvant être obtenu conformément à un procédé selon l'une quelconque des revendications 9 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- EP 661305 A
- EP 882074 A
- EP 882093 A
- EP 882094 A
- EP 902796 A
- EP 1005508 A
- EP 1018523 A
- EP 1240205 A
- EP 1448733 A
- EP 1340774 A
- EP 1457245 A
- DE 4003422 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- McCutcheon's, Emulsifiers & Detergents. MC Publishing Company, 1989
- **J. BRANDRUP ; E.H. IMMERGUT.** Polymerhandbook. John Wiley & Sons, 1989, 133-141
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, 123
- Ullmann's Encyclopädie der technischen Chemie. Verlag Chemie, 1980, vol. 19, 18, , 4
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175